**Europäisches Patentamt**

**European Patent Office**

**Office européen des brevets**

(11) Veröffentlichungsnummer: **0 409 033 A2**

# EUROPÄISCHE PATENTANMELDUNG

(21) Anmeldenummer: **90113060.9**

(22) Anmeldetag: **09.07.90**

(51) Int. Cl.5: **G01N 21/64, G01N 21/77**

(30) Priorität: **19.07.89 DE 3923950**

(43) Veröffentlichungstag der Anmeldung:
**23.01.91 Patentblatt 91/04**

(84) Benannte Vertragsstaaten:
**BE CH DE DK FR GB IT LI NL SE**

(71) Anmelder: **Gesellschaft für Biotechnologische Forschung mbH (GBF)**
**Mascheroder Weg 1**
**D-3300 Braunschweig-Stöckheim(DE)**

(72) Erfinder: **Schaffar, Bernhard, Dr.**
**Mascheroder Weg 1**
**D-3300 Braunschweig(DE)**

(74) Vertreter: **Boeters, Hans Dietrich, Dr. et al**
**Boeters & Bauer Bereiteranger 15 15**
**D-8000 München 90(DE)**

(54) **Faseroptische Sensoranordnung zur Bestimmung eines Analyts, insbesondere von Glucose.**

(57) Die Erfindung hat eine faseroptische Sensoranordnung zur Bestimmung eines Analyts, insbesondere von Glucose, zum Gegenstand. Auf einer lichtleitenden Einzelfaser ist ein miniaturisierter Glucosesensor angebracht, wobei am vorderen Ende der Einzelfaser eine Silikongummischicht mit darin gelöstem Fluoreszenzindikator und einem Überzug aus einem lichtabsorbierenden Stoff vorgesehen ist. Hierauf ist ein Enzym immobilisiert und mit einer Schutzmembran versehen, die durch einfaches Tauchen in eine Lösung aufgebracht werden kann.

Fig. 1

## FASEROPTISCHE SENSORANORDNUNG ZUR BESTIMMUNG EINES ANALYTS, INSBESONDERE VON GLUCOSE

Die Erfindung bezieht sich auf eine faseroptische Sensoranordnung zur Bestimmung eines Analyts, insbesondere von Glucose, umfassend eine Lichtleiteranordnung mit stirnseitig angeordnetem Sensor.

Zur kontinuierlichen Glucosebestimmung sind faseroptische Sensoranordnungen bekannt geworden, die ein Lichtfaserbündel mit einem flachem Sensoraufbau auf dessen Stirnseite umfassen. Der flache Sensoraufbau wirkt sich bei Messungen in einer Durchflußmeßkammer in bezug auf die hydrodynamischen Eigenschaften nachteilig aus. Beispielsweise kommt es zum Haftenbleiben von Luftblasen in der Meßkammer, aufgrund deren die Glucosemessung erschwert ist und eine genaue Messung nicht möglich ist.

Der Erfindung liegt die Aufgabe zugrunde, eine faseroptische Sensoranordnung zur Bestimmung eines Analyts vorzusehen, die vielseitig einsetzbar, für Messungen in Durchflußmeßkammern hydrodynamisch günstig ist und insbesondere zur kontinuierlichen Glucosebestimmung geeignet ist.

Diese Aufgabe ist erfindungsgemäß bei einer faseroptischen Sensoranordnung mit den Merkmalen des Anspruchs 1 gelöst. Vorteilhafte Weitergestaltungen der erfindungsgemäßen fa seroptischen Sensoranordnung sind Gegenstand der Unteransprüche.

Das Verhalten der erfindungsgemäßen faseroptischen Sensoranordnung ist außerordentlich günstig. Die Ansprechzeit des Sensors bis zu einem stabilen Signal beträgt etwa 1 bis 3 Minuten. Die Lebenszeit der Sensoren beträgt über eine Woche, wobei nach einer Woche noch kein Signalabfall in bezug auf den anfänglichen Signalpegel gemessen wird.

Eine erfindungsgemäße faseroptische Sensoranordnung zur Bestimmung eines Analyts, insbesondere von Glucose, umfaßt somit eine Lichtleiteranordnung mit stirnseitig angeordnetem Sensor, wobei als Lichtleiteranordnung eine lichtleitende Einzelfaser vorgesehen ist, auf dem vorderen Ende der lichtleitenden Einzelfaser eine Silikongummischicht mit darin gelöstem Fluoreszenzindikator aufgebracht ist, die Silikongummischicht mit einem lichtabsorbierenden Stoff überzogen ist, darauf ein Enzym immobilisiert ist und eine Schutzmembran auf der Enzymschicht angeordnet ist.

Die erfindungsgemäße faseroptische Sensoranordnung umfaßt somit lediglich eine Einzelfaser, was sich auf die hydrodynamischen Eigenschaften der Sensoranordnung sehr vorteilhaft auswirkt. Eine erfindungsgemäße Faseranordnung zur Glucosebestimmung kann als miniaturisierter Glucosebiosensor direkt in Lösungen (z.B. Lebensmittel oder invasiv im Blutstrom) oder in festen Proben (Fleisch, Fisch etc.) sowie in Durchflußmeßkammern eingesetzt werden.

Das Meßprinzip der erfindungsgemäßen faseroptischen Sensoranordnung basiert bei der Glucosebestimmung auf der fluorimetrischen Sauerstoffbestimmung über die dynamische Fluoreszenzlöschung eines Indikators durch Triplett-Sauerstoff. Als Trägermaterial enthält die Sensoranordnung eine Schicht Silikongummi, in dem ein Fluoreszenzindikator, der eine von der Sauerstoffkonzentration abhängige Fluoreszenz zeigt, gelöst bzw. immobilisiert ist. Hierbei wird die Eigenschaft von Silikon ausgenutzt, daß dieses eine hohe Permeabilität und Löslichkeit für Sauerstoff besitzt. Die Silikongummischicht ist mit einem lichtabsorbierendem Stoff überzogen, um eine optische Isolierung des Sensors von der Umgebung zu erzielen und einen möglichen Einfluß einer Eigenfluoreszenz der Probenflüssigkeit auszuschalten. Dieser Aufbau stellt somit einen Sauerstoffsensor dar. Eine weitere Funktion des lichtabsorbierenden Stoffes besteht darin, daß er als Haftvermittler zwischen der Silikongummischicht und dem darauf immobilisierten Enzym bzw. Enzymgel dient. Das immobilisierte Enzym verbraucht während einer katalysierten Reaktion Sauerstoff. Beispielsweise wandelt die zur Glucosebestimmung verwendete Glucoseoxidase Glucose und Sauerstoff in Gluconolacton und Wasserstoffperoxid um. Die währenddessen erfolgende Abnahme der Sauerstoffkonzentration wird über den Sauerstoffsensor gemessen. Die verbrauchte Sauerstoffmenge ist zur zu messenden Glucosekonzentration proportional. Auf der Enzymschicht ist schließlich eine Schutzmembran angeordnet, die die Enzymschicht gegen Einwirkungen durch die Probenflüssigkeit schützt.

Es hat sich als zweckmäßig herausgestellt, die Umhüllung am vorderen Ende der Einzelfaser über eine Länge von etwa 0,0 bis 1,0 mm, vorzugsweise 0,5 bis 1,0 mm, zu entfernen. Auf diese Weise kann die aufzubringende Silikongummischicht sicher mit der Einzelfaser verbunden werden und zugleich ist eine optische Isolierung der Einzelfaser gegen Umgebungslicht sichergestellt. Sehr vorteilhaft ist eine tropfenförmige Aufbringung der Silikongummischicht auf dem Ende der Einzelfaser.

Als Fluoreszenzindikator wird vorzugsweise Dekacyclen verwendet. Es kann jedoch jeder beliebige Fluoreszenzfarbstoff verwendet werden, der eine Änderung der Fluoreszenzintensität mit der Sauerstoffkonzentration zeigt.

Bei einer bevorzugten Ausführungsform der erfindungsgemäßen faseroptischen Sensoranordnung ist der lichtabsorbierende Stoff Aktivkohle. Es können jedoch auch andere Stoffe verwendet werden, die als Haftvermittler zwischen Enzym und Silikongummi, d.h. als Substrat zur Enzymimmobilisierung dienen.

Bei einer bevorzugten Ausführungsform der Erfindung ist das Enzym Glucoseoxidase. Alternativ kann das Enzym beispielsweise eine der Oxidasen, Oxygenasen oder Oxidoreductasen sein. Dies ermöglicht die Bestimmung weiterer Analyte zusätzlich zur Glucosebestimmung.

Vorteilhaft wird das Enzym durch Quervernetzen mit Glutardialdehyd immobilisiert. Es können jedoch auch andere Enzymimmobilisierungstechniken verwendet werden.

Die Schutzmembran ist zweckmäßig aus Celluloseacetat, das vorteilhaft durch Tauchen in eine Lösung aufgebracht ist. Hierbei handelt es sich im Fall von Celluloseacetat um Celluloseacetatlösung in Acetonitril. Entsprechend der Dicke der Schutzmembran kann die Sensorempfindlichkeit bzw. der analytische Bereich des Sensors eingestellt werden.

Die Gesamtmeßvorrichtung gemäß der Erfindung ist außerordentlich einfach. Die lichtleitende Einzelfaser wird vorteilhaft an ein herkömmliches Fluorimeter angeschlossen, wobei lediglich anstelle einer normalerweise eingesetzten Küvettenhalterung eine drehbare Spiegelanordnung vorgesehen ist, so daß Licht aus einer Lichtquelle durch ein erstes Linsensystem über die drehbare Spiegelanordnung in die lichtleitende Faser eingekoppelt wird. Die lichtleitende Faser ist außerdem über ein zweites Linsensystem mit einem Detektor des Fluorimeters verbunden.

Die Erfindung wird im folgenden weiter anhand bevorzugter Ausführungsbeispiele und der Zeichnung beschrieben. In der Zeichnung zeigen:

Fig. 1 eine Querschnittsansicht einer lichtleitenden Einzelfaser mit stirnseitig angeordnetem Sensor,

Fig. 2 eine schematische Anordnung des Gesamtaufbaus einer faseroptischen Sensoranordnung gekoppelt mit einem herkömmlichen Fluorimeter,

Fig. 3a ein Beispiel für eine Sensoranordnung zur statischen Messung in Lösungen,

Fig. 3b ein Beispiel einer in eine Durchflußmeßkammer eingebauten Sensoranordnung,

Fig. 4 eine Kalibrationskurve einer Sensoranordnung zur statischen Messung,

Fig. 5 eine Kalibrationskurve einer Sensoranordnung zur Messung in einer Durchflußmeßkammer,

Fig. 6a und 6b eine Draufsicht und eine Querschnittsansicht einer Vorrichtung zur Kopplung einer lichtleitenden Einzelfaser an ein herkömmliches Fluorimeter.

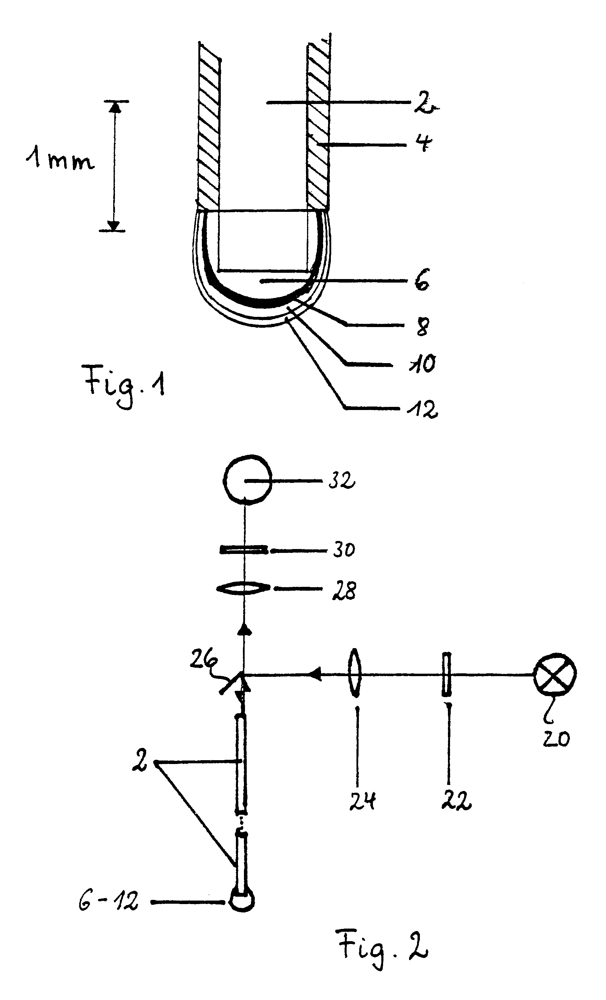

In Fig. 1 ist eine Querschnittsansicht einer erfindungsgemäßen faseroptischen Sensoranordnung zur Bestimmung von Glucose dargestellt. Das vordere Ende einer lichtleitenden Einzelfaser 2 ist nackt, d.h. die Umhüllung 4 der Einzelfaser ist in einer Länge von etwa 0,5 bis 1,0 mm entfernt. In diesem Bereich ist eine Silikongummischicht 6 mit darin ge diesem Bereich ist eine Silikongummischicht 6 mit darin gelöstem Dekacyclen als Fluoreszenzindikator tropfenförmig aufgebracht. Die Silikongummischicht ist mit Aktivkohle 8 als lichtabsorbierendem Stoff überzogen. Auf der Aktivkohle ist eine Schicht des Enzyms Glucoseoxidase 10 durch Quervernetzen mit Glutardialdehyd immobilisiert. Auf die Enzymschicht ist eine Schutzmembran 12 aus Celluloseacetat durch Tauchen in eine Celluloseacetatlösung in Acetonitril aufgebracht.

Fig. 2 zeigt die Kopplung der erfindungsgemäßen Sensoranordnung mit einem herkömmlichen Fluorimeter. Vor einer Lichtquelle 20 sind ein Anregegungslichtmonochromator 22 und ein erstes Linsensystem 24 angeordnet. Ein Spiegel 26 ist so angeordnet, daß er durch das erste Linsensystem hindurchtretendes Licht in die lichtleitende Einzelfaser 2 reflektiert, das am vorderen Ende der Einzelfaser in den Glucosebiosensor 6-12 eintritt.

Am anderen Ende der lichtleitenden Einzelfaser befinden sich ein zweites Linsensystem 28 sowie ein Fluoreszenzlichtmonochromator 30. Das aus der lichtleitenden Einzelfaser tretende fokussierte und gefilterte Licht tritt dann in einen Photomultiplier 32 ein, dessen elektrisches Ausgangssignal einer Auswerteeinheit zugeführt werden kann.

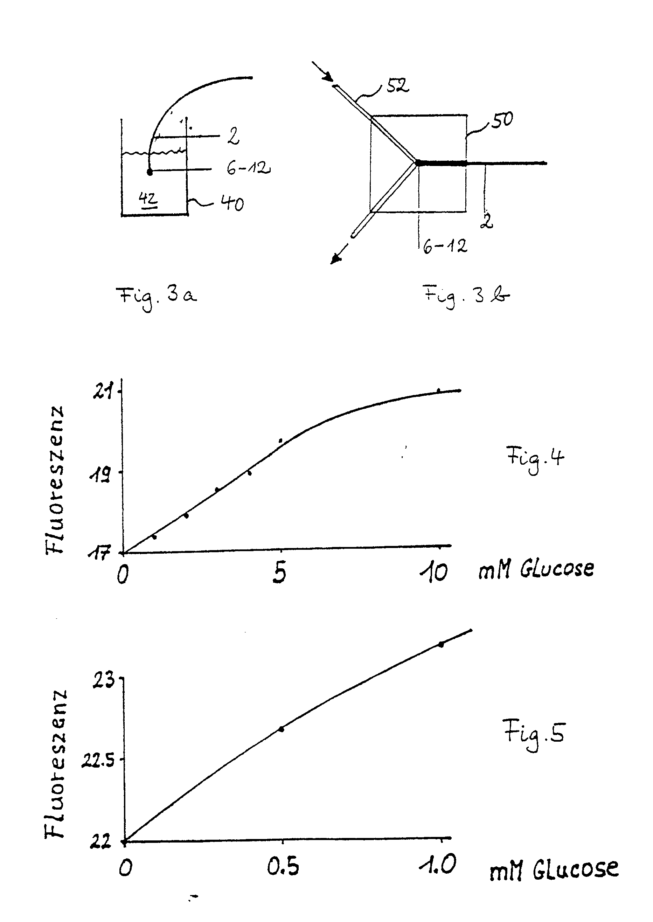

In Fig. 3a ist eine erfindungsgemäße Sensoranordnung zur statischen Messung in Lösungen schematisch dargestellt. Eine lichtleitende Einzelfaser 2 ist mit ihrem vorderen Ende bzw. dem Glucosesensor 6-12 in eine in einem Behälter 40 enthaltene Lösung 42 eingetaucht, deren Glucosegehalt bestimmt werden soll.

In Fig. 3b ist schematisch eine in einer Durchflußmeßkammer eingebaute erfindungsgemäße faseroptische Sensoranordnung dargestellt. Eine lichtleitende Einzelfaser 2 erstreckt sich durch die Wand einer Durchflußmeßkammer 50 zu einer Leitung 52, die in Fig. 3b von oben nach unten von einer zu untersuchenden Flüssigkeit durchströmt wird.

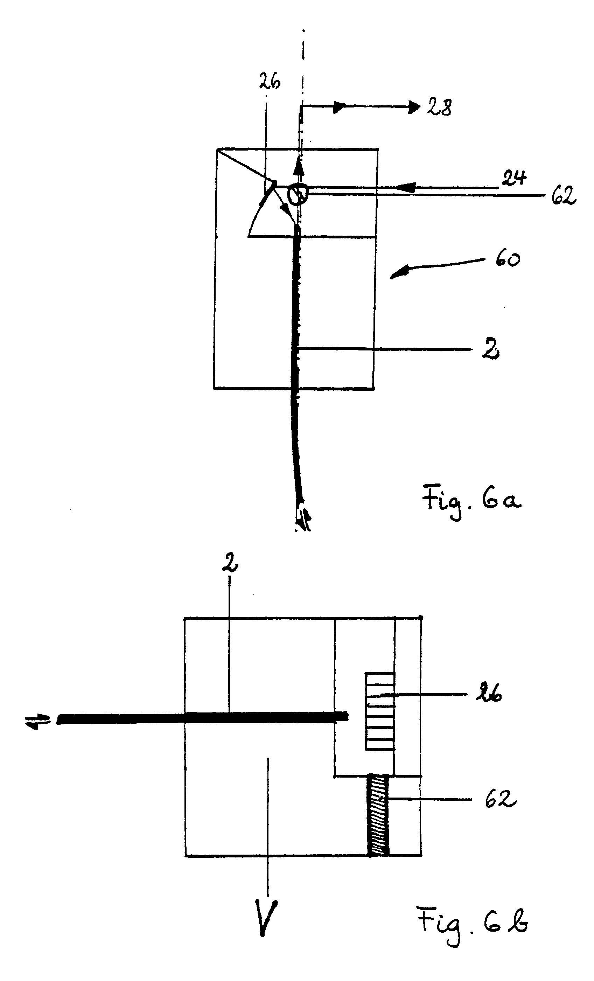

In Fig. 4 ist eine Kalibrationskurve eines Glucosesensors für eine statische Meßanordnung, z.B. die in Fig. 3a veranschaulichte Meßanordnung, dargestellt. Das Photomultiplier-Ausgangssignal (Fluoreszenz) ist gegen die GLucosekonzentration aufgetragen. Der analytische Bereich der Sensoranordnung beträgt bei dieser statischen Anordnung 1 bis 10 mM Glucose.

Bei der in einer Durchflußanordnung dargestellten Kalibrationskurve von Fig. 5 ist der analytische Bereich 0,05 bis 1,5 mM. Durch größere Dicke der Schutzmembran können jedoch höhere Glucosekonzentrationen gemessen werden.

In Fig. 6a und Fig. 6b ist schematisch der Aufbau einer Vorrichtung zur Kopplung einer lichtleitenden Einzelfaser an ein herkömmliches Fluorimeter veranschaulicht. Soweit die Teile dieselben wie bei der Darstellung von Fig. 2 sind, sind sie mit denselben Bezugszeichen versehen und werden nicht erneut beschrieben. In diesem Fall ist der Spiegel 26 ein aufgeklebtes Stück Aluminiumfolie, die leicht parabolisch geformt ist. Der Spiegel 26 und das Ende der lichtleitenden Einzelfaser 2 sind in einem Block 60 aus Plexiglas angeordnet. Mittels einer Schraube 62 ist der Block 60 drehbar mit dem Innenraum des Fluorimeters verbunden. Herkömmlich befände sich an dieser Stelle eine Küvettenhalterung.

## Ansprüche

1. Faseroptische Sensoranordnung zur Bestimmung eines Analyts, insbesondere von Glucose, umfassend eine Lichtleiteranordnung mit stirnseitig angeordnetem Sensor, dadurch **gekennzeichnet,** daß
- als Lichtleiteranordnung eine lichtleitende Einzelfaser (2) vorgesehen ist,
- auf dem vorderen Ende der lichtleitenden Einzelfaser (2) eine Silikongummischicht (6) mit darin gelöstem Fluoreszenzindikator aufgebracht ist,
- die Silikongummischicht (6) mit einem lichtabsorbierenden Stoff (8) überzogen ist,
- darauf ein Enzym (10) immobilisiert ist und
- eine Schutzmembran (12) auf der Enzymschicht (10) angeordnet ist.

2. Faseroptische Sensoranordnung nach Anspruch 1, dadurch **gekennzeichnet,** daß am vorderen Ende der lichtleitenden Einzelfaser (2) die Umhüllung (4) entfernt ist.

3. Faseroptische Sensoranordnung nach Anspruch 2, dadurch **gekennzeichnet,** daß die Umhüllung (4) am vorderen Ende der Einzelfaser (2) über eine Länge von etwa 0,0 bis 1,0 mm, insbesondere 0,5 bis1,0 mm entfernt ist.

4. Faseroptische Sensoranordnung nach einem der Ansprüche 1 bis 3, dadurch **gekennzeichnet,** daß die Silikongummischicht (6) mit dem Fluoreszenzindikator tropfenförmig aufgebracht ist.

5. Faseroptische Sensoranordnung nach einem der Ansprüche 1 bis 4, dadurch **gekennzeichnet,** daß der Fluoreszenzindikator Dekacyclen ist.

6. Faseroptische Sensoranordnung nach einem der Ansprüche 1 bis 5, dadurch **gekennzeichnet,** daß der lichtabsorbierende Stoff (8) Aktivkohle ist.

7. Faseroptische Sensoranordnung nach einem der Ansprüche 1 bis 6, dadurch **gekennzeichnet,** daß das Enzym (10) Glucoseoxidase ist.

8. Faseroptische Sensoranordnung nach einem der Ansprüche 1 bis 6, dadurch **gekennzeichnet,** daß das Enzym eine der Oxidasen, Oxygenasen oder Oxidoreductasen ist.

9. Faseroptische Sensoranordnung nach einem der Ansprüche 1 bis 8, dadurch **gekennzeichnet,** daß das Enzym (10) durch Quervernetzen mit Glutardialdehyd immobilisiert ist.

10. Faseroptische Sensoranordnung nach einem der Ansprüche 1 bis 9, dadurch **gekennzeichnet,** daß die Schutzmembran (12) aus Celluloseacetat ist.

11. Faseroptische Sensoranordnung nach einem der Ansprüche 1 bis 10, dadurch **gekennzeichnet,** daß die Schutzmembran (12) durch Tauchen in eine Lösung aufgebracht ist.

12. Faseroptische Sensoranordnung nach Anspruch 9 und 11, dadurch **gekennzeichnet,** daß die Schutzmembran (12) durch Tauchen in eine Celluloseacetatlösung in Acetonitril aufgebracht ist.

13. Faseroptische Sensoranordnung nach einem der Ansprüche 1 bis 12, dadurch **gekennzeichnet,** daß die Sensorempfindlichkeit mittels der Dicke der Schutzmembran (12) einstellbar ist.

14. Faseroptische Sensoranordnung nach einem der Ansprüche 1 bis 13, dadurch **gekennzeichnet,** daß die lichtleitende Faser (2) über eine drehbare Spiegelanordnung (26) mit einer Lichtquelle (20) und einem ersten Linsensystem (24) verbunden ist und über ein zweites Linsensystem (28) mit einem Detektor (32) verbunden ist.

Fig. 1

Fig. 2

Fig. 3a

Fig. 3b

Fig. 4

Fig. 5

26

28

24
62

60

2

Fig. 6a

2

26

62

V

Fig. 6b